# EUROPÄISCHE PATENTSCHRIFT

(11) **EP 2 952 990 B1**
(45) Veröffentlichungstag und Bekanntmachung des Hinweises auf die Patenterteilung: **20.02.2019**
(21) Anmeldenummer: 14171557.3
(22) Anmeldetag: 06.06.2014
(51) Int. Cl.: G05B 19/18, G05B 19/41

(54) **Optimiertes Steuern einer zerspanenden Werkzeugmaschine**
Optimized control of a chip-producing working machine
Commande optimisée d'une machine d'usinage pour enlèvement de copeaux

(43) Veröffentlichungstag der Anmeldung: 09.12.2015
(73) Patentinhaber: Siemens Aktiengesellschaft, 80333 München (DE)
(72) Erfinder: Bretschneider, Jochen, 73732 Esslingen (DE); Pitz, Thomas, 71263 Weil der Stadt (DE)

(56) Entgegenhaltungen:
- DE-A1- 10 343 785
- GB-A- 2 423 592

## Beschreibung

Die vorliegende Erfindung betrifft ein Verfahren zum Steuern einer zerspanenden Werkzeugmaschine durch Bereitstellen eines Bearbeitungsprogramms zur Steuerung der zerspanenden Werkzeugmaschine, wobei das Bearbeitungsprogramm mehrere, nebeneinander verlaufende Fräsbahnabschnitte zur Herstellung einer 3D-Kontur beschreibt, wobei jeder Fräsbahnabschnitt aus einer Abfolge von Bahnelementen, nämlich Stützpunkten und Linienelementen, besteht, und jedes Linienelement ein Paar der Stützpunkte miteinander verbindet, sowie das Optimieren eines Verlaufs der Bahn und Steuern der Fräsmaschine entsprechend der optimierten Bahn. Darüber hinaus betrifft die vorliegende Erfindung eine entsprechende Steuervorrichtung zum Steuern einer zerspanenden Werkzeugmaschine.

Im Folgenden werden die zerspanenden Werkzeugmaschinen meist stellvertretend als Fräsmaschine bezeichnet, auch wenn darunter z.B. auch eine Drehmaschine zu verstehen ist. Unter einem Linienelement wird hier z.B. eine gerade Linie, ein Kreiselement oder ein höherwertiges Geometrieelement (beispielsweise Spline) oder eine Kombination davon verstanden.

Bei der Freiformflächenbearbeitung (z.B. im Werkzeug- und Formenbau) werden in aller Regel NC-Bearbeitungsprogramme zur Steuerung der jeweiligen Maschine, insbesondere Fräsmaschine, verwendet. NC-Bearbeitungsprogramme (auch Teileprogramme genannt) werden heutzutage hauptsächlich durch CAD/CAM/PP-Systeme generiert. Dabei wird der herzustellende Körper bzw. Gegenstand zunächst mit einem CAD-Programm entworfen (Computer Aided Design)und anschließend durch ein CAM-Programm (Computer Aided Manufacturing) in einen maschinenunabhängigen Code (beschreibt den Bearbeitungsablauf) übersetzt. Ein Post-Prozessor (PP) übersetzt den maschinenunabhängigen Code in einen maschinenabhängigen Code, das NC-Bearbeitungsprogramm, das zur Ansteuerung der jeweils konkreten Maschine genutzt werden kann. Die Bearbeitung wird dabei in unterschiedliche Schritte unterteilt, dem Schruppen, Vorschlichten und Schlichten.

Spätestens beim Schlichtprozess werden die zu bearbeitenden bzw. herzustellenden Oberflächen in im Wesentlichen in gleichem Abstand laufende Bearbeitungsbahnen zerlegt, welche die Oberflächenkontur des Werkstücks beschreiben, die dann beispielsweise in einem Zerspannungsprozess durch eine Fräsmaschine abgefahren werden. Eine derartige Bearbeitungsbahn (nachfolgend kurz Bahn genannt) ist eine Bahn, die aus Stützpunkten besteht, welche paarweise durch Linienelemente (nachfolgend auch Linearsätze genannt) verbunden sind.

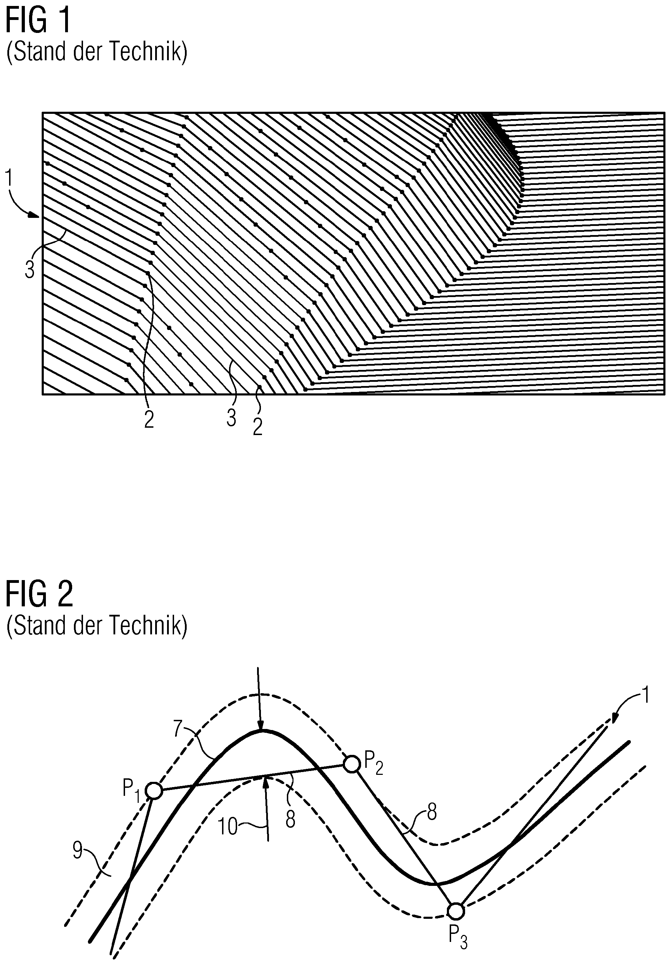

Ein derartiges Programm bzw. seine grafische Visualisierung ist in FIG 1 ausschnittsweise wiedergegeben. Eine Oberflächenkontur soll hier mit zahlreichen nebeneinander verlaufenden Fräsbahnen 1 (d.h. Fräsbahnabschnitte mit näherungsweise gleichem Abstand zueinander) erzeugt werden. Jede der Fräsbahnen besteht aus mehreren Stützpunkten 2 und mehreren Linearabschnitten 3. Zwischen jeweils zwei benachbarten Stützpunkten 2 befindet sich ein Linienelement bzw. ein Linearsatz, der diese beiden Stützpunkte 2 verbindet.

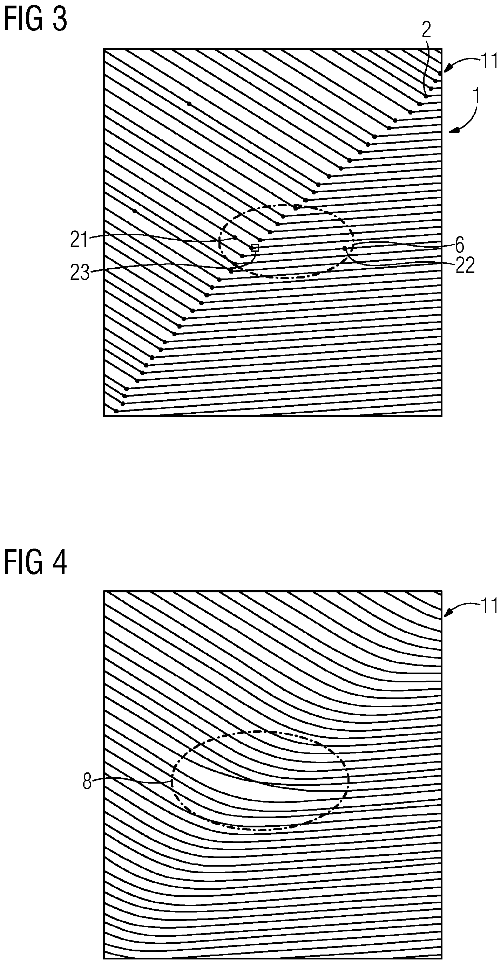

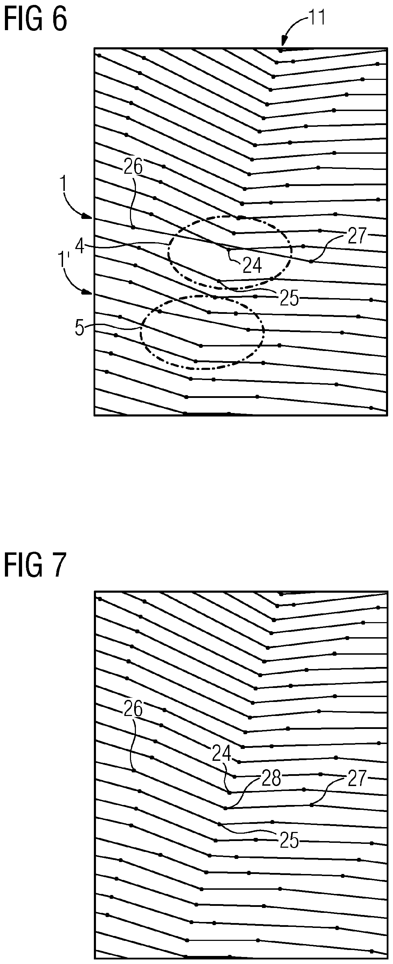

Bei dem Entstehungsprozess der Bahn kommt es gelegentlich zu Abweichungen 4,5 im Rahmen der vorgegebenen Rechentoleranz (vergleiche FIG 6), wenn Stützpunkte unerwünschterweise vom CAM-System ausgelassen oder versetzt angeordnet werden. Es kann aber auch zu Abweichungen 6 (vergleiche FIG 3) kommen, wenn zu viele Stützpunkte vorhanden sind.

Das in dem CAD/CAM/PP-System entstandene NC-Teileprogramm wird üblicherweise auf eine Maschine mit einer NC-Steuerung aufgespielt und anschließend durch einen Maschinenbediener auf der Maschine mithilfe der NC-Steuerung verfahren. Dabei betrachtet eine NC-Steuerung jeden Fräsbahnabschnitt einzeln mit einem gewissen Zeit- und Entfernungshorizont in die Zukunft (Look-Ahead) und wertet harte Abweichungen in nebeneiander liegenden Fräsbahnabschnitten nicht aus. Die Frässpitze oder Kugelmitte beim Kugelfräser bewegt sich hierbei entlang der jeweiligen Fräsbahnabschnitte. Nebeneinanderliegende Fräsbahnabschnitte (Parallelbahnen) werden abhängig von der Frässtrategie oft direkt nacheinander bearbeitet.

In diesem Zusammenhang offenbart die DE 103 43 785 A1 ein Verfahren zur Bearbeitung eines Werkstücks mittels eines spanabhebenden Werkzeugs auf einer NC-gesteuerten Maschine, bei welchem das Werkzeug längs Zeilen relativ zu dem Werkstück bewegt wird, wobei mittels der Steuerung der Abstand der Zeilen ermittelt und mit einem vorgegebenen Soll-Abstand verglichen wird und zumindest für die Bereiche, bei denen der Abstand der Zeilen den Soll-Abstand überschreitet, automatisch zumindest eine Hilfszeile eingefügt wird.

Zur Generierung eines NC-Bearbeitungsprogramms, das die gesamte Fräsbahn beschreibt, die vom Fräser abzufahren ist, steht dem CAM-System in aller Regel eine Flächen- oder Körperbeschreibung durch Funktionen höherer Ordnung aus dem CAD-System zur Verfügung. Eine solche Funktion 7 höherer Ordnung wird durch das CAM-System in Fräsrichtung linearisiert, d. h. durch Linearsätze bzw. Linearabschnitte 8 approximiert. Jeder Linearabschnitt verbindet zwei benachbarte Stützpunkte, z.B. P1 und P2 oder P2 und P3. Jeder der Stützpunkte P1, P2 und P3 liegt bspw. auf dem Rand eines Toleranzbands 9, das in FIG 2 durch gepunktete Ränder dargestellt ist. An jeder Stelle ergibt sich dementsprechend ein ortsabhängiger Sehnenfehler 10. Der Sehnenfehler stellt also den Abstand des linearisierten Fräsbahnabschnitts 1 zu der idealen Funktion 7 dar und muss einen vorgegebenen Toleranzwert unterschreiten. Durch die Linearisierung sinkt also die Oberflächengenauigkeit.

Die Fräsmaschine ihrerseits bekommt das Teileprogramm, d. h. die Fräsbahnabschnitte 1 zur Verfügung gestellt und sollte daraus die ideale Funktion 7 "erahnen". Dazu können beispielsweise Spline-Algorithmen verwendet werden, die die linearisierten Fräsbahnabschnitte verrunden. Dies führt ggf. zu weiteren Artefakten (vgl. FIG 3 und 4).

Einen direkten Einfluss auf die Verteilung der Stützpunkte haben der vorgegebene Toleranzwert für den Sehnenfehler im CAM-System und die Algorithmen zur Linearisierung im CAM-System. In der industriellen Praxis ist jedoch eine Vielzahl von CAM-Systemen mit unterschiedlichen Eigenschaften im Einsatz.

Zur Verbesserung der Oberflächenqualität kann im CAM-System die Toleranz verringert (das Toleranzband 9 verschmälert) werden und die Möglichkeiten des CAM zur Homogenisierung der Punkteverteilung im Bearbeitungsprogramm verwendet werden. Problematisch dabei ist, dass die Bediener des CAM unterschiedlich geschult sind und die Qualität der Programme stark vom Erfahrungsgrad des Nutzers abhängt.

Auf Seite der NC-Steuerung gibt es heute nur die Möglichkeit der Glättung der Bahnen in Fräsrichtung (eindimensional). Dabei arbeitet die Glättung unterschiedlich in Abhängigkeit von den zur Verfügung stehenden Stützpunkten sowie deren Verteilung. Dies kann zu Problemen führen, was in den Beispielen von FIG 3 und FIG 4 gezeigt ist. Das NC-Programm beschreibt die Erzeugung beispielsweise einer Kante 11, die sukzessive durch die einzelnen Fräsbahnabschnitte 1 ausgebildet werden soll. Bei den meisten Fräsbahnabschnitten 1 ergeben sich hier in der Nähe der Fräskante 11 keine weiteren Stützpunkte. Auf einer der Fräsbahnabschnitte im Bereich der Abweichung 6 werden hier aus Rundungsgründen, Toleranzgründen etc. zufällig weitere Stützpunkte 21, 22 in der Nähe der Kante 11 ausgebildet. Die Kante 11 wird auf diesem Fräsbahnabschnitt also durch drei Punkte 21, 22 und 23 beschrieben. Die NC-Steuerung kann darauf vollkommen anders als bei einem Fräsbahnabschnitt, auf dem die Kante nur durch einen einzigen Stützpunkt 2 beschrieben ist, reagieren.

Eine mögliche Reaktion einer konkreten NC-Steuerung bzw. Fräsmaschine ist in FIG 4 wiedergegeben. Die Fräskante 11 ist überall gleich verschliffen, aber derjenige Fräsbahnabschnitt, der durch die drei zusammenliegenden Stützpunkte 21, 22 und 23 beschrieben ist, liegt wesentlich höher als alle anderen Fräsbahnabschnitte. Auf der bearbeitenden Oberfläche ergibt sich dadurch eine deutliche Störung.

Ähnliche Auswirkungen ergeben sich bei einer gekrümmten Fläche, wenn ein Fräsbahnabschnitt in einem gewissen Bereich einen Stützpunkt besitzt und die benachbarten oder der benachbarte nicht. Durch die Glättung fährt der Fräser dann auf jedem Bahnabschnitt eine andere "Schlangenlinie". Dies führt zu einer deutlichen Ausbildung von Riefen auf der Oberfläche.

Die Probleme der Oberflächenqualität wurden bislang unter anderem dadurch gelöst, dass Programme höherer Qualität im CAM erzeugt wurden oder die NC-Steuerung eine geringe Glättungs-Toleranz vorgegeben bekommt, innerhalb welcher Ecken und Kanten möglichst genau gemäß den Vorgaben eingehalten werden. Dadurch sind solche Oberflächenfehler weniger sichtbar. Allerdings kommt es so zur Ausbildung scharfer Kanten, die die Maschine abfahren muss, mit dem unerwünschten Effekt von Geschwindigkeitseinbußen.

Eine weitere Möglichkeit, diese Probleme zu lösen, ist die Nachbearbeitung des gefertigten Werkstücks "per Hand". Dabei werden die einzelnen Fräsfehler nach dem Anfertigen des Werkstücks manuell beseitigt, was im Herstellungsprozess Zeit und somit Geld kostet.

Es gibt natürlich auch die Möglichkeit, NC-Teileprogramm im CAD/CAM mit leicht geänderten Parametern neu zu generieren, was wiederum zu neuen, anderen Fehlern führen kann. Allerdings kostet diese Art der globalen Reparatur natürlich auch Zeit.

Die Aufgabe der vorliegenden Erfindung besteht somit darin, die Oberflächenqualität beim Bearbeiten mit automatisierten, zerspanenden Werkzeugmaschine zu verbessern.

Erfindungsgemäß wird diese Aufgabe gelöst durch ein Verfahren zum Steuern einer zerspanenden Werkzeugmaschine durch
- Bereitstellen eines Bearbeitungsprogramms zur Steuerung der zerspanenden Werkzeugmaschine, wobei
- das Bearbeitungsprogramm mehrere, nebeneinander verlaufende Fräsbahnabschnitte, die zusammen eine Bahn bilden, zur Herstellung einer 3D-Kontur beschreibt, wobei jeder Fräsbahnabschnitt aus einer Abfolge von Bahnelementen, nämlich Stützpunkten und Linienelementen, besteht, und jedes Linienelement ein Paar der Stützpunkte miteinander verbindet, sowie
- Optimieren eines Verlaufs der Bahn; und
- Steuern der zerspanenden Werkzeugmaschine entsprechend der optimierten Bahn,
- Analysieren zumindest eines Teils eines ersten der Fräsbahnabschnitte des Bearbeitungsprogramms hinsichtlich einer Einhaltung eines vorgegebenen Toleranzwerts in Bezug auf mindestens ein Bahnelement mindestens eines zum ersten benachbarten zweiten Fräsbahnabschnitts, wobei
- das Optimieren des Verlaufs der Bahn dadurch erfolgt, dass mindestens ein Bahnelement von/zu dem ersten Fräsbahnabschnitt so verändert, hinzugefügt oder entfernt wird, dass der vorgegebene Toleranzwert eingehalten wird.

Darüber hinaus wird erfindungsgemäß bereitgestellt eine Steuervorrichtung zum Steuern einer zerspanenden Werkzeugmaschine mit
- einer Speichereinrichtung zum Bereitstellen eines Bearbeitungsprogramms zur Steuerung der zerspanenden Werkzeugmaschine, wobei
- das Bearbeitungsprogramm mehrere, nebeneinander verlaufende Fräsbahnabschnitte, die zusammen eine Bahn bilden, zur Herstellung einer 3D-Kontur beschreibt, wobei jeder Fräsbahnabschnitt aus einer Abfolge von Bahnelementen, nämlich Stützpunkten und Linienelementen, besteht, und jedes Linienelement ein Paar der Stützpunkte miteinander verbindet, sowie
- einer Recheneinrichtung zum Optimieren eines Verlaufs der Bahn, und
- einer Ansteuereinrichtung zum Steuern der zerspanenden Werkzeugmaschine entsprechend der optimierten Bahn, wobei
- die Recheneinrichtung ausgelegt ist zum Analysieren zumindest eines Teils eines ersten der Fräsbahnabschnitte des Bearbeitungsprogramms hinsichtlich einer Einhaltung eines vorgegebenen Toleranzwerts in Bezug auf mindestens ein Bahnelement mindestens eines zum ersten benachbarten zweiten Fräsbahnabschnitts, wobei
- das Optimieren des Verlaufs der Bahn in der Recheneinrichtung dadurch erfolgt, dass mindestens ein Bahnelement des ersten Fräsbahnabschnitts so verändert, hinzugefügt oder entfernt wird, dass der vorgegebene Toleranzwert eingehalten wird.

Bei der zerspanenden Werkzeugmaschine kann es sich um eine Fräsmaschine (unter Umständen auch Drehmaschine) und bei der Bearbeitungsbahn um eine Fräsbahn handeln.

In vorteilhafter Weise wird also ein Fräsbahnabschnitt erfindungsgemäß (auch) im Hinblick auf ein oder mehrere Bahnelemente eines oder mehrerer benachbarter Fräsbahnabschnitte, ggf. auch Fräsbahnabschnitte aus der näheren Umgebung, analysiert. Die Optimierung der Bahn erfolgt dann dadurch, dass Stützpunkte und damit auch Linienelemente entsprechend dem Analyseergebnis in ihre Position verändert, entfernt oder hinzugefügt werden. Die Optimierung eines Fräsbahnabschnitts (allgemein: Bearbeitungsbahnabschnitt) erfolgt also dadurch, dass eine oder mehrere Komponenten einer oder mehrerer benachbarter Fräsbahnabschnitte ins Kalkül gezogen werden (vorzugsweise die Segmente benachbarter Fräsbahnabschnitte, die sich in räumlicher Nähe des betrachteten (zu optimierenden Bahnabschnittes befinden).Mit der Erfindung ist damit eine Verbesserung der Oberfläche eines Werkstücks möglich, welches mittels eines defekt generierten NC-Teileprogramms entstanden ist. Ähnlich wie bei sogenannten "Smart-Repair-Methoden" in der KFZ-Branche werden dabei Defektstellen identifiziert und anschließend lokal repariert. Insbesondere ist es dadurch möglich, dass eine NC-Steuerung nicht mehr jeden Bahnabschnitt einzeln betrachtet und somit Abweichungen in parallelen Bahnabschnitten leichter erkennen kann. Der Rechenalgorithmus zur Abminderung von Oberflächenfehlern, bzw. Glättung, kann sich dabei auf einen Abstand oder Winkel des ersten zu dem zweiten Fräsbahnabschnitt, also der Fräsbahnabschnitte untereinander, beziehen. Insbesondere kann er sich auf einen Abstand oder Winkel von geometrischen Objekten wie Punkt, Gerade durch zwei Punkte oder Fläche durch drei Punkte definiert durch Punkte auf mindestens aber nicht ausschließlich einem Bahnabschnitt einer Fräsbahn zu geometrischen Objekten definiert durch Punkte auf mindestens aber nicht ausschließlich einem Bahnabschnitt einer anderen Fräsbahn beziehen. Auf diese Weise kann festgestellt werden, dass ein Fehler in dem Bearbeitungsprogramm vorliegt, wenn der Abstand zwischen zwei Fräsbahnabschnitten bzw. Linienelementen oder der Winkel dazwischen zu groß oder die Stützstellenverteilung auf dem jeweiligen Bahnabschnitt zu grob ist.

Gemäß einer Ausführungsform kann beim Optimieren für jeden Fräsbahnabschnitt die Bedingung erfüllt werden, dass der Abstand zwischen zwei benachbarten Stützpunkten auf einem Fräsbahnabschnitt oder auf benachbarten Fräsbahnabschnitten kleiner als ein vorgegebener erster Maximalabstandswert ist. Dies bedeutet, dass nicht nur entlang eines Fräsbahnabschnitts, sondern auch quer dazu untersucht wird, ob ein vorgegebenes Stützpunktraster eingehalten wird. Sind benachbarte Stützpunkte zu weit beabstandet, so kann automatisch ein zusätzlicher Stützpunkt eingefügt werden oder es können in einem vorgegebenen Radius der betrachteten Stelle die Bahnverläufe der Bahnabschnitte berücksichtigt werden. Dabei kann ein Maximalabstand für jede Raumrichtung einzeln vorgegeben werden, und insbesondere können sich die jeweiligen Maximalabstände voneinander unterscheiden.

Der Schritt des Optimierens kann mit der Vorgabe wiederholt werden, dass der vorgegebene Mindestabstandswert kleiner als der erste Mindestabstandswert ist. Dies bedeutet, dass mit unterschiedlicher Rasterung sukzessive versucht werden kann, zusätzliche Stützpunkte in ein Teileprogramm einzubauen.

Gemäß der Erfindung werden bei dem Analysieren mehrere oder jeder der Stützpunkte des ersten Fräsbahnabschnitts separat untersucht, wobei jeweils sämtliche Stützpunkte in einem vorgegebenen Raumbereich um den zu untersuchenden Stützpunkt bzw. auch Schnittpunkte eines Rands des Raumbereichs mit Bahnabschnitten berücksichtigt werden. Dies bedeutet, dass für die Erzeugung eines optimierten Teileprogramms nicht nur die Punkte auf einem Fräsbahnabschnitt untersucht werden, sondern sämtliche Stützpunkte in einem räumlichen Bereich um einen Stützpunkt herum und/oder Schnittpunkte der Fräsbahnen mit dem Rand des räumlichen Bereichs. Wird dann beispielsweise ein Toleranzwert nicht eingehalten (z. B. zu großer oder zu kleiner Abstand bzw. Winkel gegenüber einem anderen Bahnelement oder gegenüber einer Fläche oder dergleichen) so wird der untersuchte Stützpunkt in seiner Position verändert, entfernt oder es wird ein neuer Stützpunkt in den Raumbereichen hinzugefügt.

Bei dem vorgegebenen Raumbereich kann es sich um eine Kugel mit Mittelpunkt auf dem zu untersuchenden Stützpunkt handeln. Der Raumbereich kann natürlich auch durch jeden anderen geometrischen Körper, z. B. Würfel, Zylinder und dergleichen gebildet sein.

Gegebenenfalls wird in einem konkreten Raumbereich um den zu untersuchenden Stützpunkt auf mindestens einem darin befindlichen Linienelement ein Stützpunkt automatisch vor dem Analysieren hinzugefügt, falls die Anzahl der Stützpunkte in dem konkreten Raumbereich unter einem vorgegeben Zahlenwert liegt, eine vorgegebene Verteilung nicht eingehalten ist oder ein Höchstabstand von Stützpunkten überschritten ist. Damit lässt sich auf einem Fräsbahnabschnitt auf der Basis von Nachbarschaftsinformation, also von Information über den Verlauf eines oder mehrerer benachbarter Fräsbahnabschnitte, ein zusätzlicher Stützpunkt integrieren, mit dem sich eine Oberflächenglättung bewirken lässt.

Bei der Optimierung der Bahn zur Reduktion von Oberflächenfehlern kann eine geometrische Zusatzinformation benutzt werden, die von den Bahnelementen unabhängig ist. Beispielsweise kann die Zusatzinformation eine Kante, eine Ecke oder eine andere geometrische Bahn bzw. einen anderen geometrischen Körper (z. B. Kugel, Zylinder etc.) betreffen. Mit einer solchen Zusatzinformation lässt sich die Position der betroffenen Stützpunkte zusätzlich optimieren.

Das Analysieren und Optimieren kann zumindest teilweise während des Steuerns der Fräsmaschine erfolgen. Das Optimieren des Teileprogramms zum Verschleifen bzw. Glätten der Oberfläche kann also während des Programmlaufs durchgeführt werden, wenn dies beispielsweise die NC-Steuerung zulässt. Alternativ kann das Analysieren und Optimieren aber auch vorab beispielsweise auf einem PC erfolgen.

Die oben detailliert dargestellten Verfahrensschritte lassen sich auch auf die erfindungsgemäße Steuervorrichtung als Funktionen unabhängig voneinander übertragen.

Die vorliegende Erfindung wird anhand der beigefügten Zeichnungen näher erläutert, in denen zeigen:
- FIG 1: eine bildliche Wiedergabe eines NC-Bearbeitungsprogramms gemäß dem Stand der Technik;
- FIG 2: eine Linearisierung eines idealen Konturzugs in einem vorgegebenen Toleranzband gemäß dem Stand der Technik;
- FIG 3: ein fehlerhaftes Teileprogramm mit Kante;
- FIG 4: eine Reaktion einer konkreten NC-Steuerung auf das Teileprogramm von FIG 3;
- FIG 5: ein Ablaufdiagramm eines erfindungsgemäßen Verfahrens (integriert als Rechenalgorithmus in einer CNC) ;
- FIG 6: die graphische Wiedergabe eines Teileprogramms mit fehlenden Stützpunkten;
- FIG 7: ein gegenüber FIG 6 optimiertes Teileprogramm;
- FIG 8: die Vernetzung eines Satzes von Stützpunkten, und
- FIG 9: eine Vernetzung von Stützpunkten mit zusätzlicher Kanteninformation.

Die nachfolgend näher geschilderten Ausführungsbeispiele stellen bevorzugte Ausführungsformen der vorliegenden Erfindung dar.

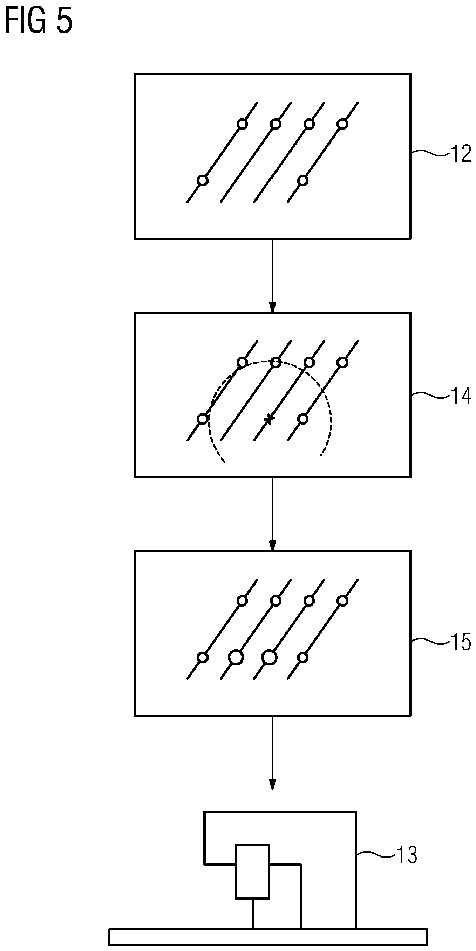

Ausgangspunkt ist wieder ein Teileprogramm (auch NC-Programm genannt), das von einem CAM-System oder PP-System bereitgestellt wird und somit ein Bearbeitungsprogramm 12 gemäß FIG 5 darstellt. Bei der Umsetzung dieses Bearbeitungsprogramms 12 mit einer Fräsmaschine 13 werden unbefriedigende Ergebnisse entstehen, wenn beispielsweise eine Glättung der Kontur eindimensional in Bearbeitungsrichtung ausgeführt werden würde. Nebeneinanderliegende Fräsbahnabschnitte würden dabei nicht erkannt werden und etwaige Nachbarschaftsverhältnisse würden nicht ausgewertet werden. D. h. zur Generierung des Fräsbahnabschnitts bzw. der Bahn würden in der NC-Maschine eine begrenzte Menge zukünftiger Linearsätze entlang der Fräsrichtung ausgewertet werden (Look-Ahead). Dies geschähe entweder durch Vorgabe der Anzahl der zu betrachtenden zukünftigen Sätze oder aber eines geometrischen Maßes (z. B. bei gegebener Geschwindigkeit 10 cm in die Zukunft schauend entlang des jeweiligen Fräsbahnabschnitts). Dieses bekannte fehlerhafte Verfahren wird nun erfindungsgemäß wie folgt verbessert.

In einem Analyseschritt 14 findet eine Analyse zumindest eines Teils eines der Fräsbahnabschnitte der Bahn, also eines ersten Fräsbahnabschnitts des Bearbeitungsprogramms 12 statt. Dabei wird untersucht, ob der erste Fräsbahnabschnitt bzw. ein Linienelement oder ein Stützpunkt desselben einen Toleranzwert einhält. Ein solcher Toleranzwert ist beispielsweise ein Abstand von einem Stützpunkt auf dem ersten Fräsbahnabschnitt zu einem Stützpunkt auf einem benachbarten, zweiten Fräsbahnabschnitt. Der Toleranzwert kann sich aber auch auf einen Abstand von einem untersuchten Stützpunkt zu einem Linienelement eines benachbarten Fräsbahnabschnitts beziehen. Außerdem kann sich der Toleranzwert auch auf Winkel zwischen Linienelementen zweier benachbarter Fräsbahnabschnitte beziehen. Allgemein werden also für die Analyse eines Fräsbahnabschnitts nicht nur die Stützpunkte auf diesem Fräsbahnabschnitt, sondern auch Bahnelemente von Fräsbahnabschnitten aus der Umgebung (direkt benachbarte oder auch indirekt benachbarte Fräsbahnelemente) herangezogen.

Wird nun ein vorgegebener Toleranzwert verletzt, so ist die Bahn in einem Optimierungsschritt 15 zu optimieren. In diesem Optimierungsschritt 15 wird die Bahn des Bearbeitungsprogramms 12 dahingehend optimiert, dass ein Bahnelement des ersten Bahnabschnitts verändert, hinzugefügt oder entfernt wird. Konkret wird beispielsweise als Bahnelement ein Stützpunkt auf einem analysierten Fräsbahnabschnitt hinzugefügt. Aufgrund des optimierten Fräsbahnabschnitts und anderer davon unabhängiger Optimierungsschritte für den gleichen und andere Fräsbahnabschnitte ergibt sich eine optimierte Bahn, welche schließlich für die Fräsmaschine 13 benutzt wird. Wie unten erläutert werden wird, können die Schritte 14 und 15 auch in der Steuerung der Fräsmaschine 13 ausgeführt werden.

In einer Ausführungsform kann die Analyse und damit die Identifizierung oben genannter Oberflächenfehler mittels einer Multiskalenanalyse unter Bezugnahme auf die nebeneinander liegenden Fräsbahnabschnitte erfolgen. Das Verfahren wird dann durch eine Endpunktgenerierung bzw. Endpunktverwerfung auf den Bahnabschnitt ergänzt. Dabei werden zunächst eine Anzahl paralleler Bahnabschnitte einander zugeordnet. Im nächsten Schritt werden geometrische Unterschiede (Abstände, Winkel etc.) zwischen den Bahnabschnitten ermittelt und analysiert. In einem letzten Schritt können nun Bahnelemente hinzugefügt oder entfernt werden.

Das Verfahren kann wahlweise an einem PC nach dem CAD/CAM/PP-Prozess, als separater Verfahrensschritt an der Maschine vor der Werkstückbearbeitung oder, falls die Leistungsfähigkeit der NC-Steuerung ausreicht, im Echtzeitbetrieb während der Werkstückbearbeitung eingesetzt werden. Denkbar ist auch ein semiautomatischer Prozess, bei dem einem Maschinenbediener die kritischen Stellen an einem Human-Maschinen-Interface angezeigt werden und der Maschinenbediener die Reparatur der Stellen bestätigen kann. Ein solches Verfahren ist natürlich einer Neugenerierung des gesamten NC-Teileprogramms am CAD/CAM/PP-System vorzuziehen.

Durch die simultane Betrachtung näherungsweise paralleler Bahnabschnitte ergibt sich eine bessere Oberflächenqualität ohne manuelle Nachbearbeitung unter Einhaltung der gewünschten Oberflächenbeschaffenheit (z. B. Eckigkeit).

In einem konkreten Beispiel gemäß den FIG 6 und 7 soll eine schwache Kante wie in dem Beispiel der FIG 3 und 4 erzeugt werden. Anders als in dem dortigen Beispiel ergeben sich in dem Bearbeitungsprogramm hier jedoch zwei Fehlerstellen 4 und 5, die sich dadurch auszeichnen, dass auf den betroffenen Fräsbahnabschnitten 1 und 1' jeweils ein Stützpunkt auf der Kante 11 fehlt. Die Kante 11 lag bei der Linearisierung offensichtlich in dem entsprechenden Toleranzband 9 (vgl. FIG 2). Ohne Optimierung würde sich daraus ein entsprechender Oberflächenfehler ergeben.

Durch Multiskalenanalyse werden die kritischen Bereiche (Fehlerstellen 4 und 5) bzw. die betreffenden Fräsbahnabschnitte 1 und 1' identifiziert. Es wird nun beispielsweise festgestellt, dass der Abstand zwischen den Stützpunkten auf dem Fräsbahnabschnitt 1 an der Kante 11 größer ist als der Abstand der Stützpunkte an einem benachbarten Fräsbahnabschnitt im Bereich der Kante 11. Ist diesbezüglich ein Toleranzwert überschritten, so wird ein zusätzlicher Stützpunkt eingefügt. Hierzu wird Information von einer benachbarten oder mehreren benachbarten Fräsbahnabschnitt eingeholt. Speziell wird beispielsweise erkannt, dass die Stützpunkte 24 und 25 auf den unmittelbar benachbarten, quasi parallelen Fräsbahnabschnitten im Bereich des Mittelpunkts zwischen den Stützpunkten 26 und 27 des Fräsbahnabschnitts 1 angeordnet sind. Diese benachbarten Stützpunkte 24 und 25 werden dann zur Generierung eines neuen Stützpunkts 28 auf diesem Fräsbahnabschnitt 1 herangezogen (vgl. FIG 7). Eine ähnliche Korrektur kann hinsichtlich des fehlenden Stützpunkts auf Fräsbahnabschnitt 1' durchgeführt werden, wie dies ebenfalls in FIG 7 dargestellt ist.

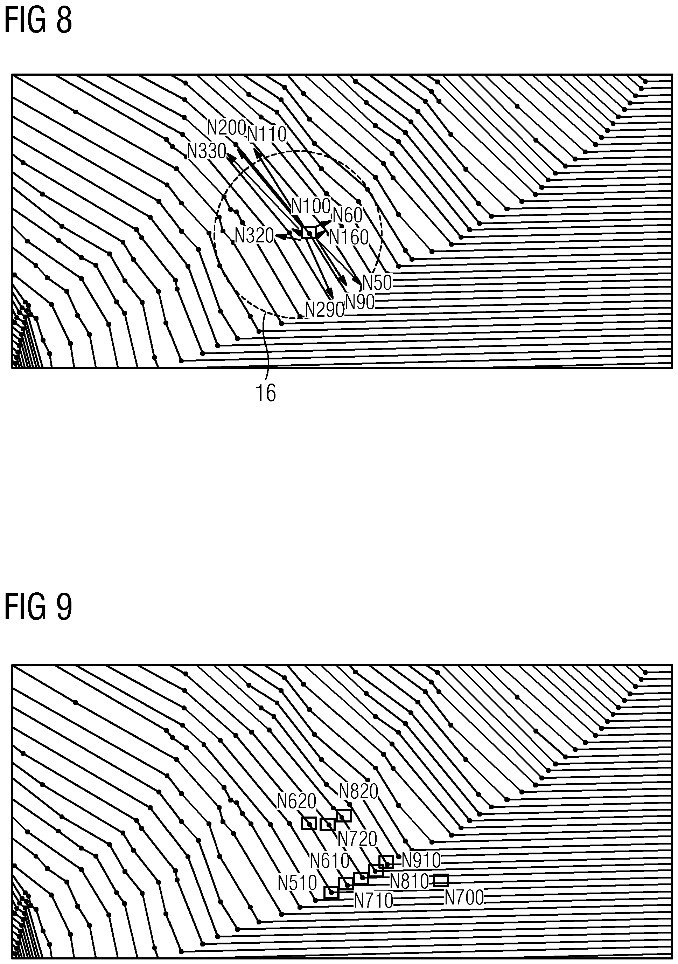

Gemäß einer weiteren Ausführungsform, die anhand der FIG 8 und 9 näher erläutert werden wird, wird das NC-Programm ebenfalls unter Einbeziehung von Nachbarschaftsinformation auf eine etwas andere Weise vorbereitet. Mit der Leistungsfähigkeit heutiger Steuerungen lässt sich diese Vorbereitung im Sekundenbereich umsetzen. Dabei werden die Nachbarschaftsbeziehungen von Stützpunkten explizit bestimmt und z. B. im Teileprogramm als Kommentar oder in Form eines neuen NC-Kommandos abgelegt. Konkret wird jedem NC-Verfahrbefehl ein Nachbar explizit bekannt gegeben.

Steht bislang beispielsweise der NC-Satz N100 (vgl. FIG 8) in direkter Verbindung mit seinem auf dem Fräsbahnabschnitt vor- und nachgelagerten NC-Satz N90 und N110, so steht er gemäß dieser Ausführungsform der Erfindung in Verbindung mit den NC-Sätzen seiner direkten räumlichen Umgebung, was ebenfalls FIG 8 zu entnehmen ist. Jeder Satz beschreibt hier einen konkreten Stützpunkt. Dabei bedeutet der Buchstabe (hier "N") einen konkreten Bereich von Fräsbahnabschnitten und die anschließende Zahl die jeweilige Nummer des konkreten Stützpunkts.

In dem speziellen Beispiel von FIG 8 wird der Stützpunkt N100 analysiert. Die Untersuchung erfolgt anhand all derjenigen Stützpunkte, die innerhalb eines vorgegebenen Raumbereichs angeordnet sind. Im Fall von FIG 8 handelt es sich bei dem Raumbereich um eine Kugel mit dem Stützpunkt N100 als Zentrum. Für die Optimierung der Position des Stützpunkts N100 werden nur Stützpunkte innerhalb der Kugel 16 herangezogen, optional auch Schnittstellen der Kugel mit Bahnverläufen. Die Anzahl der Stützpunkte kann weiter dadurch eingeschränkt werden, dass nur bestimmte Fräsbahnabschnitte z. B. nur zwei, drei, vier etc. Bahnabschnitte aus der unmittelbaren Umgebung herangezogen werden. Außerdem kann die Anzahl der Stützpunkte auf den weiter entfernten Bahnabschnitt durch ihren Abstand von dem zu untersuchenden Stützpunkt (hier N100) für die Berücksichtigung reduziert werden. In dem Beispiel von FIG 8 werden dann zur Analyse des Stützpunkts N100 die Stützpunkte N50, N60, N90, N160, N290 und N320 herangezogen. Die Stützpunkte N110, N200 und N330 liegen hingegen außerhalb der Kugel 16 und werden nicht berücksichtigt. Falls die Kugel 16 oder ein anders gearteter Raumbereich (Zylinder, Quader etc.) größer gewählt wird, so liegen gegebenenfalls auch diese Punkte N110, N200 und N330 im Berücksichtigungsbereich.

Im Teileprogramm wird die Nachbarschaftsbeziehung des Satzes N100 z. B. wie folgt bekannt gegeben:
1. als Kommentar:
   N100 X Y Z; N110, N200, N330, N320, N290, N90, N50, N60, N160
2. als eigenständiges NC-Kommando "Nachbar":
   N100 X Y Z Nachbar (N110, N200, N330, N320, N290, N90, N50, N60, N160)

Dabei bedeuten X, Y und Z die jeweiligen Koordinatenwerte in den drei verschiedenen Raumrichtungen.

Ist die NC-Steuerung leistungsfähig genug, so kann die Bestimmung der Nachbarn nicht in einer vorgelagerten Berechnung, sondern zur Programmlaufzeit ausgeführt werden. Alternativ kann bereits das CAM-System die räumlichen Nachbarschaftsbeziehungen bestimmen und im NC-Programm übergeben. In diesem Fall ist es denkbar, nicht nur die Nachbarn zu übergeben, sondern Zusatzinformationen zur genannten Ausgestaltung von Konturelementen zu übergeben. So kann beispielsweise gemäß FIG 9 eine harte Kante 11 durch ein NC-Kommando "Kante" definiert sein. Eine Nachbarschaftsbeziehung ließe sich dann wie folgt definieren:
N 710 X Y Z Nachbar (N620, N720, N820, N700) Kante (N510, N610, N810, N910).

Ähnliche Zusatzinformationen können sich auch auf Ecken und andere geometrische Orte, Linien und Flächen beziehen. Erfindungsgemäß erfolgt also eine Auswertung von räumlicher Information zum Verschleifen eines Fräsbahnabschnitts anstatt dem reinen Verschleifen entlang des Fräsbahnabschnitts ohne Berücksichtigung von Nachbarschaftsbeziehungen. Dazu erfolgt eine explizite Herstellung der Nachbarschaftsbeziehung vorzugsweise durch die NC-Steuerung im Rahmen einer Vorbearbeitung. Gegebenenfalls werden Zwischenpunkte durch die NC-Steuerung erzeugt, um die lokalen Nachbarschaftsbeziehungen innerhalb eines zwei- bzw. dreidimensionalen Toleranzbands auswerten zu können. Vorzugsweise werden die Nachbarschaftsbeziehungen bereits im CAM hergestellt und lediglich in der NC-Steuerung verarbeitet. Dabei werden ggf. neben den Nachbarschaftsbeziehungen auch Konturelemente (z. B. Kante) übergeben und berücksichtigt.

Der Vorteil der vorliegenden Erfindung liegt insbesondere in der spürbaren Erhöhung der Bearbeitungsgenauigkeit bei CAMgenerierten Programmen bei gleichzeitiger Erhöhung der Unabhängigkeit von der Qualifikation des CAM-Programmierers und der Qualität des CAM-Programms.

Liegen innerhalb des gewählten kreisförmigen bzw. kugelförmigen Toleranzbereichs nicht genügend Stützstellen, so können von der Steuerung oder dem Rechner auch Zwischenpunkte auf den Nachbarbahnen automatisch erzeugt und eingefügt werden.

## Patentansprüche

1. Ein Verfahren zum Steuern einer zerspanenden Werkzeugmaschine (13) durch
- Bereitstellen eines Bearbeitungsprogramms (12) zur Steuerung der zerspanenden Werkzeugmaschine (13), wobei
- das Bearbeitungsprogramm (12) mehrere, nebeneinander verlaufende Fräsbahnabschnitte (1), die zusammen eine Bahn bilden, zur Herstellung einer 3D-Kontur beschreibt, wobei jeder Fräsbahnabschnitt (1) aus einer Abfolge von Bahnelementen, nämlich Stützpunkten (P₁, P₂, P₃) und Linienelementen (8), besteht, und jedes Linienelement (8) ein Paar der Stützpunkte (P₁, P₂, P₃) miteinander verbindet, sowie
- Optimieren (15) eines Verlaufs der Bahn und
- Steuern der zerspanenden Werkzeugmaschine (13) entsprechend der optimierten Bahn, wobei mindestens ein Bahnelement (28) von/zu dem ersten Fräsbahnabschnitt (1) so verändert, hinzugefügt oder entfernt wird, dass der vorgegebene Toleranzwert eingehalten wird,
**gekennzeichnet durch**
- Analysieren (14) zumindest eines Teils eines ersten der Fräsbahnabschnitte (1) des Bearbeitungsprogramms (12) hinsichtlich einer Einhaltung eines vorgegebenen Toleranzwerts in Bezug auf mindestens ein Bahnelement mindestens eines zum ersten benachbarten zweiten Fräsbahnabschnitts, wobei mehrere oder jeder der Stützpunkte (P₁, P₂, P₃) des ersten Fräsbahnabschnitts (1) separat untersucht werden/wird, und dabei jeweils sämtliche Stützpunkte (N50, N60, N90, N160, N290, N320) in einem vorgegebenen Raumbereich um den zu untersuchenden Stützpunkt berücksichtigt werden.

2. Verfahren nach Anspruch 1, wobei der vorgegebene Raumbereich eine Kugel (16) mit Mittelpunkt auf dem zu untersuchenden Stützpunkt (P₁, P₂, P₃) ist.

3. Verfahren nach Anspruch 1 oder 2, wobei in einem konkreten Raumbereich um den zu untersuchenden Stützpunkt (P₁, P₂, P₃) auf mindestens einem darin befindlichen Linienelement (8) ein Stützpunkt automatisch vor dem Analysieren (14) hinzugefügt wird, falls die Anzahl oder ein gegenseitiger Abstand der Stützpunkte (P₁, P₂, P₃) in dem konkreten Raumbereich unter einem vorgegebenen Zahlenwert liegt.

4. Verfahren nach einem der vorhergehenden Ansprüche, wobei der Toleranzwert sich auf einen Abstand oder Winkel des ersten zu dem zweiten Fräsbahnabschnitt (1') oder eine Kombination davon bezieht.

5. Verfahren nach einem der vorhergehenden Ansprüche, wobei beim Optimieren (15) für den Fräsbahnabschnitt (1) die Bedingung erfüllt wird, dass der Abstand zwischen zwei benachbarten Stützpunkten (P₁, P₂, P₃) kleiner als ein vorgegebener erster Mindestabstandswert ist.

6. Verfahren nach einem der vorhergehenden Ansprüche, wobei der Schritt des Optimierens (15) mit der Vorgabe wiederholt wird, dass der vorgegebene Mindestabstandswert kleiner als der erste Mindestabstandswert ist.

7. Verfahren nach einem der vorhergehenden Ansprüche, wobei bei dem Optimieren (15) eine geometrische Zusatzinformation, die von den Bahnelementen unabhängig ist, benutzt wird.

8. Verfahren nach einem der vorgehenden Ansprüche, wobei das Analysieren (14) und Optimieren (15) zumindest teilweise während des Steuerns der zerspanenden Werkzeugmaschine (13) erfolgt.

9. Steuervorrichtung zum Steuern einer zerspanenden Werkzeugmaschine (13) mit
- einer Speichereinrichtung zum Bereitstellen eines Bearbeitungsprogramms (12) zur Steuerung der zerspanenden Werkzeugmaschine (13), wobei
- das Bearbeitungsprogramm (12) mehrere, nebeneinander verlaufende Fräsbahnabschnitte (1), die zusammen eine Bahn bilden, zur Herstellung einer 3D-Kontur beschreibt, wobei jeder Fräsbahnabschnitt aus einer Abfolge von Bahnelementen, nämlich Stützpunkten (P₁, P₂, P₃) und Linienelementen (8), besteht, und jedes Linienelement (8) ein Paar der Stützpunkte (P₁, P₂, P₃) miteinander verbindet, sowie
- einer Recheneinrichtung zum Optimieren (15) eines Verlaufs der Bahn, wobei das Optimieren des Verlaufs der Bahn in der Recheneinrichtung dadurch erfolgt, dass mindestens ein Bahnelement (28) des ersten Fräsbahnabschnitts (1) so verändert, hinzugefügt oder entfernt wird, dass der vorgegebene Toleranzwert eingehalten wird, und
- einer Ansteuereinrichtung zum Steuern der zerspanenden Werkzeugmaschine(13) entsprechend der optimierten Bahn,
**dadurch gekennzeichnet, dass**
- die Recheneinrichtung ausgelegt ist zum Analysieren (14) zumindest eines Teils eines ersten der Fräsbahnabschnitte (1) des Bearbeitungsprogramms (12) hinsichtlich einer Einhaltung eines vorgegebenen Toleranzwerts in Bezug auf mindestens ein Bahnelement mindestens eines zum ersten benachbarten zweiten Fräsbahnabschnitts (1'), wobei mehrere oder jeder der Stützpunkte (P₁, P₂, P₃) des ersten Fräsbahnabschnitts (1) separat untersucht werden/wird, und dabei jeweils sämtliche Stützpunkte (N50, N60, N90, N160, N290, N320) in einem vorgegebenen Raumbereich um den zu untersuchenden Stützpunkt berücksichtigt werden.

## Claims

1. Method for controlling a metal-cutting machine tool (13) by
- providing a processing program (12) for controlling the metal-cutting machine tool (13), wherein
- the processing program (12) describes a number of cutting path sections (1) running next to one another, which together form a path, for establishing a 3D contour, wherein each cutting path section (1) consists of a series of path elements, namely support points (P₁, P₂, P₃) and line elements (8), and each line element (8) connects a pair of the support points (P₁, P₂, P₃) to one another, and also
- optimising (15) a course of the path; and
- controlling the metal-cutting machine (13) in accordance with the optimised path, wherein at least one path element (28) from/to the first cutting path section (1) is modified, added or removed so that the pre-specified tolerance value is adhered to,
**characterised by**
- analysing (14) at least a part of a first of the cutting path sections (1) of the processing program (12) in respect of adherence to a pre-specified tolerance value in relation to at least one path element of at least one second cutting path section adjacent to the first, wherein a number or each of the support points (P₁, P₂, P₃) of the first cutting path section (1) is/are examined separately, and in this case in each case all support points (N50, N60, N90, N160, N290, N320) in a pre-specified spatial area around the support point to be examined are taken into consideration.

2. Method according to claim 1, wherein the pre-specified spatial area is a sphere (16) with its centre point at the support point (P₁, P₂, P₃) to be examined.

3. Method according to claim 1 or 2, wherein in a concrete spatial area around the support point (P₁, P₂, P₃) to be examined, on at least one line element (8) located therein, a support point is added automatically before the analysis (14) if the number or a distance of the support points (P₁, P₂, P₃) from each other in the concrete spatial area lies below a pre-specified numerical value.

4. Method according to one of the preceding claims, wherein the tolerance value relates to a distance or angle between the first and the second cutting path section (1') or to a combination thereof.

5. Method according to one of the preceding claims, wherein, during optimisation (15), the condition is fulfilled for the cutting path section (1) that the distance between two neighbouring support points (P₁, P₂, P₃) is smaller than a pre-specified first minimum distance value.

6. Method according to one of the preceding claims, wherein the step of optimisation (15) is repeated with the specification that the pre-specified minimum distance value is smaller than the first minimum distance value.

7. Method according to one of the preceding claims, wherein, during optimisation (15) geometrical additional information is used which is independent of the path elements.

8. Method according to one of the preceding claims, wherein the analysis (14) and optimisation (15) are undertaken at least partly during the control of the metal-cutting machine tool (13).

9. Control facility for controlling a metal-cutting machine tool (13) with
- a storage device for providing a processing program (12) for controlling the metal-cutting machine tool (13), wherein
- the processing program (12) describes a number of cutting path sections (1) running next to one another, which together form a path for manufacturing a 3D contour, wherein each cutting path section consists of a series of path elements, namely support points (P₁, P₂, P₃) and line elements (8), and each line element (8) connects a pair of the support points (P₁, P₂, P₃) to one another, and also
- a computing device for optimising (15) a course of the path, wherein the course of the path is optimised in the computing device in that at least one path element (28) of the first cutting path section (1) is modified, added or removed so that the pre-specified tolerance value is adhered to, and
- an activation device for controlling the metal-cutting machine tool (13) in accordance with the optimised path,
**characterised in that**
- the computing device is designed to analyse (14) at least one part of a first of the cutting path sections (1) of the processing program (12) in respect of adherence to a pre-specified tolerance value in relation to at least one path element of at least one second cutting path section (1') adjacent to the first, wherein a number of or each of the support points (P₁, P₂, P₃) of the first cutting path section (1) are/is examined separately, and in this examination all support points (N50, N60, N90, N160, N290, N320) in a pre-specified spatial area around the support point to be examined are taken into account.

## Revendications

1. Procédé de commande d'une machine-outil (13) à enlèvement de copeaux par
- mise à dispositif d'un programme (12) d'usinage, pour commander la machine-outil (13) à enlèvement de copeaux, dans lequel
- le programme (12) d'usinage décrit, pour la production d'un contour en 3D, plusieurs segments (1) de trajectoire de fraisage juxtaposés et formant ensemble une trajectoire, chaque segment (1) de trajectoire de fraisage étant constitué d'une succession d'éléments de trajectoire, à savoir de points (P₁, P₂, P₃) d'appui et d'éléments (8) linéaires et, chaque élément (8) linéaire reliant entre eux une paire des points (P₁, P₂, P₃) d'appui, ainsi que
- optimisation (15) d'un tracé de la trajectoire et
- commande de la machine-outil (13) à enlèvement de copeaux conformément à la trajectoire optimisée, au moins un élément (28) de trajectoire, partant du premier segment (1) de trajectoire de fraisage ou y allant, étant modifié, ajouté ou éliminé, de manière à observer la valeur de tolérance prescrite,
**caractérisé par**
- l'analyse (14) d'au moins une partie d'un premier des segments (1) de trajectoire de fraisage du programme (12) d'usinage en ce qui concerne l'observation d'une valeur de tolérance prescrite, par rapport à au moins un élément de trajectoire d'au moins un deuxième segment de trajectoire de fraisage voisin du premier, plusieurs ou chacun des points (P₁, P₂, P₃) d'appui du premier segment (1) de trajectoire de fraisage étant étudié séparément et, à cet effet, respectivement tous les points (N50, N60, N90, N160, N290, N320) d'appui respectifs dans une région de l'espace donnée à l'avance, autour du point d'appui à étudier, étant pris en compte.

2. Procédé suivant la revendication 1, dans lequel la région de l'espace donnée à l'avance est une sphère (16), dont le centre est sur le point (P₁, P₂, P₃) d'appui à étudier.

3. Procédé suivant la revendication 1 ou 2, dans lequel, dans une région de l'espace concrète, autour du point (P₁, P₂, P₃) d'appui à étudier, on ajoute, automatiquement avant l'analyse (14), un point d'appui sur au moins un élément (8) linéaire s'y trouvant, si le nombre ou une distance mutuelle des points (P₁, P₂, P₃) d'appui, dans la région de l'espace concrète, est inférieur à une valeur donnée à l'avance.

4. Procédé suivant l'une des revendications précédentes, dans lequel la valeur de tolérance se rapporte à une distance ou à un angle entre le premier et le deuxième segment (1') de trajectoire de fraisage ou à leur combinaison.

5. Procédé suivant l'une des revendications précédentes, dans lequel, lors de l'optimisation (15) du segment (1) de trajectoire de fraisage, on satisfait la condition que la distance, entre deux points (P₁, P₂, P₃) d'appui voisins, soit plus petite qu'une première valeur minimum de distance donnée à l'avance.

6. Procédé suivant l'une des revendications précédentes, dans lequel on répète le stade de l'optimisation (15) avec la prescription que la valeur minimum de distance donnée à l'avance soit plus petite que la première valeur minimum de distance.

7. Procédé suivant l'une des revendications précédentes, dans lequel, lors de l'optimisation (15), on utilise une information géométrique supplémentaire indépendante des éléments de trajectoire.

8. Procédé suivant l'une des revendications précédentes, dans lequel l'analyse (14) et l'optimisation (15) s'effectue, au moins en partie, pendant la commande de la machine-outil (13) à enlèvement de copeaux.

9. Système de commande pour commander une machine-outil (13) à enlèvement de copeaux, comprenant
- un dispositif de mémoire pour disposer d'un programme (12) d'usinage, afin de commander la machine-outil (13) à enlèvement de copeaux, dans lequel
- le programme (12) d'usinage décrit, pour la production d'un contour en 3D, plusieurs segments (1) de trajectoire de fraisage juxtaposés et formant ensemble une trajectoire, chaque segment (1) de trajectoire de fraisage étant constitué d'une succession d'éléments de trajectoire, à savoir de points (P₁, P₂, P₃) d'appui et d'éléments (8) linéaires et, chaque élément (8) linéaire reliant entre eux une paire des points (P₁, P₂, P₃) d'appui, ainsi que
- un dispositif de calcul pour optimiser (15) un tracé de la trajectoire, l'optimisation du tracé de la trajectoire dans le dispositif de calcul s'effectuant en modifiant, ajoutant ou enlevant au moins un élément (28) de trajectoire du premier segment (1) de trajectoire de fraisage, de manière à observer la valeur de tolérance prescrite et
- un dispositif de commande pour commander la machine-outil (13) à enlèvement de copeaux, conformément à la trajectoire optimisée,
**caractérisé en ce que**
- le dispositif de calcul est conçu pour l'analyse (14) d'au moins une partie d'un premier des segments (1) de trajectoire de fraisage du programme (12) d'usinage, en ce qui concerne l'observation d'une valeur de tolérance prescrite, par rapport à au moins un élément de trajectoire d'au moins un deuxième segment (1') de trajectoire de fraisage voisin du premier, plusieurs ou chacun des points (P₁, P₂, P₃) d'appui du premier segment (1) de trajectoire de fraisage étant étudié séparément et, à cet effet, respectivement tous les points (N50, N60, N90, N160, N290, N 320) d'appui dans une région de l'espace donnée à l'avance, autour du point d'appui étudié, étant pris en compte.
